# EUROPEAN PATENT APPLICATION

(11) **EP 4 601 280 A1**
(43) Date of publication of application: **13.08.2025**
(21) Application number: 24221815.4
(22) Date of filing: 19.12.2024
(51) Int. Cl.: H04N 1/00, G06T 7/00

(54) **IMAGE INSPECTION APPARATUS, IMAGE INSPECTION METHOD, AND IMAGE INSPECTION PROGRAM**

(30) Priority: 06.02.2024 JP 2024016183
(71) Applicant: KONICA MINOLTA, INC., Tokyo 100-7015 (JP)
(72) Inventor: TSUKAMOTO, Yasumasa, Tokyo, 100-7015 (JP)
(74) Representative: MFG Patentanwälte Meyer-Wildhagen Meggle-Freund Gerhard PartG mbB

(57) **Abstract**

Provided are an image inspection apparatus, an image inspection method, and an image inspection program with which it is possible to shorten the time required for processing from generation of a reference image to image inspection and to recognize the state of generation of the reference image before the image inspection.

An image inspection apparatus 300 includes an image former 330, a reference image generator 380, an image inspector 350, and a determiner 310. The image former 330 forms an image on a recording medium based on image data. The reference image generator 380 generates, based on the image data, a reference image to be used for inspection of the image formed on the recording medium. The image inspector 350 inspects the image formed on the recording medium based on the reference image. The determiner 310 determines whether or not a state of generation of the reference image by the reference image generator 380 satisfies a predetermined state before the image inspector 350 inspects the image.

## Description

### Background of the Invention

### 1. Technical Field

The present invention relates to an image inspection apparatus, an image inspection method, and an image inspection program.

### 2. Description of Related art

Conventionally, a method for inspecting the quality of a printing sheet (printed product) by comparison between a reference image and a read image obtained by reading a printing sheet (printed product) on which an inspection image is printed has been known (for example, Japanese Unexamined Patent Application Publication No. 2016-146514). In Japanese Unexamined Patent Publication No. 2016-146514, a read image of a printed product which is inspected by a user and which is determined to have no abnormality among several printed products having inspection images printed thereon is used as a reference image.

In addition, a method for inspecting the quality of a printed product by comparison between a document image which is used as a reference image and a read image obtained by reading a printed product has also been known (for example, Japanese Unexamined Patent Publication No. 2015-53561).

### Summary of the Invention

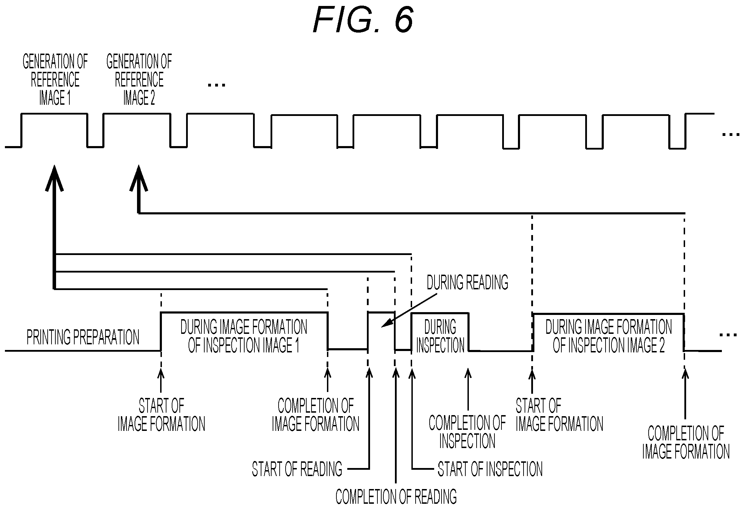

However, in an image forming apparatus disclosed in Japanese Unexamined Patent Publication No. 2016-146514, it is necessary for a user to perform inspection work in order to generate a reference image to be used for main printing. Furthermore, it is necessary to execute the main printing after a reference image is prepared before the start of the main printing. In addition, a printed product inspection device disclosed in Japanese Unexamined Patent Application Publication No. 2015-53561 needs to complete the generation of a reference image (steps S101 to S115 in Fig. 6) before the generation of an inspection image (step S117 in Fig. 6) is started. Therefore, there is a problem that considerable time is still required for the processing from the generation of the reference image (steps S101 to S115 in Fig. 6) to the image inspection (steps S117 to S119 in Fig. 6).

On the other hand, a technology for performing processing of generating a reference image and processing of inspecting an inspection image in parallel at the same time has not been proposed so far. In order to shorten the time required for the processing from the generation of the reference image to the image inspection, the present inventor has been developing a technology for simultaneously performing processing of generating a reference image and processing of inspecting an inspection image in parallel and sequentially performing image inspection using the reference image that has been generated. However, depending on the time required for generating the reference image, a situation in which the reference image is not generated at the time of the image inspection may occur. That is, the situation in which the reference image is not generated at the time of image inspection can be a factor that prevents the execution of normal image inspection.

The present invention has been made in view of the above-mentioned circumstances. An object of the present invention is to provide an image inspection apparatus, an image inspection method, and an image inspection program with which it is possible to shorten the time required for processing from generation of a reference image to image inspection and to recognize the state of generation of the reference image before the image inspection.

The above object of the present invention is achieved by the following means.

To achieve at least one of the abovementioned objects, according to an aspect of the present invention, an image inspection apparatus reflecting one aspect of the present invention comprises the followings.
(1) An image inspection apparatus including: an image former that forms an image on a recording medium based on image data; a reference image generator that generates, based on the image data, a reference image to be used for inspection of the image formed on the recording medium; an image inspector that performs inspection of the image formed on the recording medium based on the reference image; and a determiner that performs determination of whether or not a state of generation of the reference image by the reference image generator satisfies a predetermined state before the image inspector inspects the image.
(2) The image inspection apparatus according to (1), wherein the determiner determines, before the image inspector inspects the image, whether or not the reference image generator has completed the generation of the reference image.
(3) The image inspection apparatus according to (1), wherein the determiner determines, before the image inspector inspects the image, whether or not the reference image generator has generated the reference image up to a predetermined stage.
(4) The image inspection apparatus according to (1), wherein the image inspector performs the inspection for each of pages of the recording medium on which the image is formed by the image former, and
   the determiner performs the determination for each of the pages.
(5) The image inspection apparatus according to (1) or (4), wherein the determiner performs the determination at a predetermined timing before the inspection of the image is performed by the image inspector and after an image forming process by the image former is started.
(6) The image inspection apparatus according to (5), wherein the predetermined timing is a timing of starting formation of the image on the recording medium by the image former.
(7) The image inspection apparatus according to (5), wherein the predetermined timing is a timing during formation of the image on the recording medium by the image former.
(8) The image inspection apparatus according to (5), wherein the predetermined timing is a timing at which formation of the image on the recording medium by the image former is completed.
(9) The image inspection apparatus according to (1) or (4), wherein the determiner performs the determination at a timing at which the inspection of the image by the image inspector is started.
(10) The image inspection apparatus according to (1) or (4), further including a reader that reads the image formed on the recording medium, wherein
   the determiner performs the determination at a predetermined timing during a reading process by the reader.
(11) The image inspection apparatus according to (10), wherein the predetermined timing is any one of a timing at which reading of the recording medium on which the image is formed by the reader is started, a timing during the reading, and a timing at which the reading is completed.
(12) The image inspection apparatus according to (1) or (4), further including a controller that controls the image inspector when the determiner determines that a state of generation of the reference image by the reference image generator does not satisfy the predetermined state, wherein
   the controller suspends the inspection by the image inspector.
(13) The image inspection apparatus according to (1) or (4), further including a controller that performs, in parallel, a reference image generation process including generating the reference image by the reference image generator, and an inspection process including forming the image on the recording medium by the image former and inspecting, by the image inspector, a read image generated by reading the recording medium on which the image has been formed.
(14) An image inspection method including: a step (a) of forming an image on a recording medium based on image data; a step (b) of generating, based on the image data, a reference image to be used for inspection of the image formed on the recording medium; a step (c) of inspecting the image formed on the recording medium based on the reference image; and a step (d) of determining whether or not a state of generation of the reference image in the step (b) satisfies a predetermined state before the image is inspected in the step (c).
(15) An image inspection program for causing a computer to execute processing including: a process (a) of forming an image on a recording medium based on image data; a process (b) of generating, based on the image data, a reference image to be used for inspection of the image formed on the recording medium; a process (c) of inspecting the image formed on the recording medium based on the reference image; and a process (d) of determining whether or not a state of generation of the reference image in the process (b) satisfies a predetermined state before the image is inspected in the process (c).

According to the present invention, it is determined whether or not the state of generation of a reference image satisfies a predetermined state before the inspection of the inspection image is performed, and thus, it is possible to recognize the state of generation of the reference image before the image inspection while shortening the time required for the processing from the generation of the reference image to the image inspection.

### Brief Description of the Drawings

The advantages and features provided by one or more embodiments of the invention will become more fully understood from the detailed description given hereinbelow and the appended drawings which are given by way of illustration only, and thus are not intended as a definition of the limits of the present invention:
Fig. 1 is a schematic block diagram of a printing system according to a first embodiment of the present invention;
Fig. 2 is a schematic block diagram illustrating the configuration of an image forming system illustrated in Fig. 1;
Fig. 3 is a block diagram for describing the outline of a control operation of a controller and a print controller illustrated in Fig. 2;
Fig. 4 is a flowchart illustrating a processing procedure of an image inspection method performed by the image forming system illustrated in Fig. 1;
Fig. 5 is a schematic diagram illustrating, in a time-series manner, processing of acquiring a document image, processing of generating a reference image, processing of forming an inspection image, and processing of inspecting the inspection image;
Fig. 6 is a diagram for describing a modification example of a determination timing of determining the state of generation of the reference image;
Fig. 7 is a flowchart illustrating a processing procedure of an image inspection method in a case where the state of generation of a reference image corresponding to an inspection image is determined after the formation of an inspection image and before reading of the inspection image;
Fig. 8 is a flowchart illustrating a processing procedure of the image inspection method in a case where the state of generation of the reference image corresponding to the inspection image is determined before the formation of the inspection image;
Fig. 9 is a flowchart illustrating a processing procedure of an image inspection method performed by an image forming system according to a second embodiment;
Fig. 10 is a schematic diagram illustrating, in a time-series manner, processing of acquiring a document image, processing of generating a reference image, processing of forming an inspection image, and processing of inspecting the inspection image in a case where recovery printing is performed;
Fig. 11 is a flowchart illustrating a processing procedure of an image inspection method performed by an image forming system according to a third embodiment; and
Fig. 12 is a flowchart illustrating a processing procedure of an image inspection method performed by an image forming system according to a fourth embodiment.

### Detailed Description

Hereinafter, one or more embodiments of the present invention will be described with reference to the drawings. However, the scope of the invention is not limited to the disclosed embodiments. Note that in the description of the drawings, the same components are denoted by the same reference signs, and redundant descriptions will not be repeated. In addition, dimensional ratios in the drawings are exaggerated for convenience of description and may be different from actual ratios.

### (First Embodiment)

### <Configuration of Printing System>

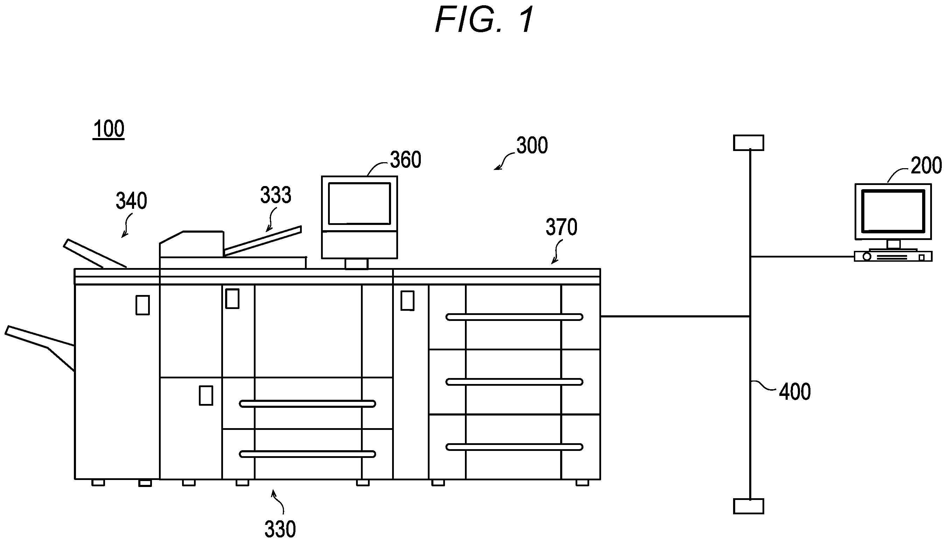

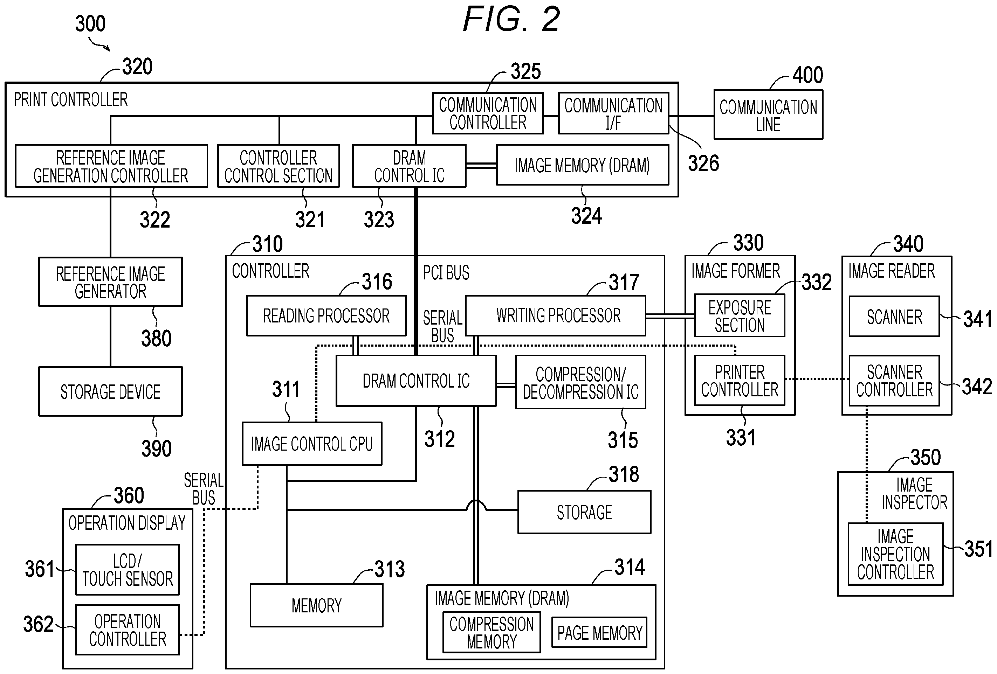

Fig. 1 is a schematic block diagram of a printing system according to a first embodiment of the present invention, and Fig. 2 is a schematic block diagram illustrating the configuration of an image forming system illustrated in Fig. 1.

As illustrated in Fig. 1, a printing system 100 includes a client terminal 200 and an image forming system 300. The client terminal 200 and the image forming system 300 are communicably connected to each other via a communication line 400.

The client terminal 200 may be, for example, a personal computer, a tablet terminal, a smartphone, or the like. A printer driver for converting document data into a print job is installed in the client terminal 200. The printer driver generates a print job in a format compatible with a print controller 320 (see Fig. 2) of the image forming system 300, and transmits the print job to the image forming system 300 via the communication line 400. In addition, the client terminal 200 includes a display, and can display an inspection result (non-defective/defective) of a printed product, an image of a defective printed product, and the like.

The print job includes, for example, print data in a page description language (PDL) format and job information. The print data includes, for example, print data of the first to n-th pages. The job information includes, for example, print settings such as the number of pages, the number of copies, the type of a sheet (recording medium), the size of the sheet, the basis weight of the sheet, single-sided printing or double-sided printing, and an inspection setting (on or off). A user can instruct the image forming system 300 to perform image inspection by turning on the inspection setting.

The communication line 400 may include a local area network (LAN) in which computers and network devices are connected to each other according to a predetermined standard, a wide area network (WAN) in which LANs are connected to each other by a dedicated line, or the like. The predetermined standard is, for example, Ethernet (registered trademark), fiber distributed data interface (FDDI), wireless fidelity (Wi-Fi), or the like.

Note that the number of the above constituent elements connected to the communication line 400 is not limited to the number illustrated in Fig. 1.

### <Configuration of Image Forming System 300>

As illustrated in Figs. 1 and 2, the image forming system 300 includes a controller 310, a print controller 320, an image former 330, an image reader 340, an image inspector 350, an operation display 360, a sheet feeder 370, a reference image generator 380, and a storage device 390. The image forming system 300 functions as an image inspection apparatus.

### <Configuration of Controller 310>

The controller 310 includes an image control central processing unit (CPU) 311, a dynamic random access memory (DRAM) control IC 312, a memory 313, an image memory (DRAM) 314, a compression/decompression IC 315, a reading processor 316, a writing processor 317, a storage 318, and the like.

The image control CPU 311 develops various programs stored in the storage 318 in the memory 313, and comprehensively controls the operation of the entire image forming system 300 in cooperation with the developed programs.

The reading processor 316 performs various kinds of processing such as analog processing, A/D conversion processing, and shading processing on an analog image signal output from a scanner 341 of the image reader 340, and generates digital image (read image) data. The generated digital image data is output to the compression/decompression IC 315 by the DRAM control IC 312. Under the control of the DRAM control IC 312, the compression/decompression IC 315 performs compression processing on digital image data and decompression processing on the digital image data after the compression processing. Furthermore, the DRAM control IC 312 controls input and output of the digital image data subjected to the compression and decompression processing to and from the image memory (DRAM) 314.

The image memory 314 is formed of a DRAM, includes regions of a compression memory and a page memory therein, and temporarily stores compressed image data, decompressed image data, and the like.

The writing processor 317 outputs the decompressed digital image data to an exposure section 332 of the image former 330.

Further, in the present embodiment, the controller 310 also functions as a reference image determiner (hereinafter, also simply referred to as "determiner"). Prior to performing image inspection by the image inspector 350, the reference image determiner receives information regarding the progress of the generation of a reference image from the reference image generator 380 and determines, for each page, whether or not the state of the generation of the reference image satisfies a predetermined state. The predetermined state can be, for example, a state in which the generation of the reference image corresponding to the inspection image by the reference image generator 380 is completed (the reference image has been generated) or whether or not the reference image has been completed to a predetermined stage. For example, the reference image determiner may be configured to determine whether or not X% or more of the entire reference image is completed. X may be, for example, 90.

### <Configuration of Print Controller 320>

The print controller 320 analyzes the print job received from the client terminal 200 via the communication line 400, performs processing such as color conversion, screening, and rasterization, and generates a document image in a bitmap format. The generated document image is transmitted to the controller 310. The print controller 320 functions as a document image acquirer.

The print controller 320 includes a controller control section 321, a reference image generation controller 322, a DRAM control IC 323, an image memory (DRAM) 324, a communication controller 325, and a communication interface (I/F) 326. The controller control section 321 comprehensively controls operation of each section of the print controller 320. Further, the controller control section 321 receives the print job from the client terminal 200 or the like via the communication I/F 326. The communication controller 325 controls the communication I/F 326.

The received print job includes print data serving as a source of a document image and job information in which print settings such as the type of a sheet to be used are described. The print data is mainly in a PDL format. The print controller 320 performs rasterization (RIP) processing for converting print data into bitmap data in units of pages based on the print settings. The RIP image after the rasterization processing is temporarily stored in the image memory 324. The RIP image in the image memory 324 is temporarily stored in a compression memory region in the image memory 314 via the compression/decompression IC 315 under the control of the DRAM control IC 323 of the print controller 320 and the DRAM control IC 312 of the controller 310. At the time of normal printing, the RIP image stored in the compression memory region is decompressed by the compression/decompression IC 315 and is transmitted to the image former 330 as a document image (image data) via the writing processor 317, and the transmitted RIP image is printed.

The reference image generation controller 322 outputs, at a predetermined generation timing, a reference image generation instruction to generate a reference image to the reference image generator 380, which will be described later, such that the reference image generator 380 generates a reference image based on the document image. The predetermined generation timing can be, for example, a timing when the inspection setting is on and the document image acquirer acquires the document image. The reference image generator 380 generates the reference image based on the reference image generation instruction.

Ideally, a read image generated by reading an inspection image formed on a sheet is considered to match the document image in terms of content. However, when the inspection image formed on the sheet is read by the scanner, an error may occur in the read image with respect to the document image due to various factors such as variations in a conveyance path for the sheet, a reading position shift by the scanner, color reproducibility, and a difference in paper type. An error may also occur in the document image depending on the resolution of reading by the scanner. Therefore, when the read image and the document image are simply compared, an error is highly likely to occur, and it is not realistic to inspect the inspection image by simply comparing the read image with the document image. In view of this, the present embodiment is configured to generate a reference image by performing various kinds of processing on the document image in terms of position, resolution, color, and the like so that the reference image can be compared with the read image, and to compare the reference image and the read image. Thus, the reference image can be appropriately compared with the read image, whereby the printed product can be accurately inspected. Details of the processing of generating the reference image will be described later. Although Fig. 2 illustrates the case where the reference image generation controller 322 is provided in the print controller 320, the reference image generation controller 322 may be provided in the controller 310.

### <Configuration of Image Former 330>

The image former 330 forms (prints) an image on a sheet with an electrophotographic method including processing of charging, exposure, development, transfer, and fixing, in accordance with an instruction from the controller 310. In the present embodiment, the image former 330 forms an inspection image to be inspected by the image inspector 350 on a sheet under an image forming condition set based on the print settings. The image former 330 includes a printer controller 331, the exposure section 332, and the like. The printer controller 331 is connected to the image control CPU 311 by serial communications, and receives control by the image control CPU 311. The printer controller 331 drives a laser diode (LD) of the exposure section 332 in response to a signal from the writing processor 317, and forms an electrostatic latent image corresponding to a document image on a photoreceptor (not illustrated). The toner image formed on the photoreceptor is developed through development processing and is transferred onto a sheet supplied from the sheet feeder 370. Next, the unfixed toner image on the sheet is fixed by being heated and pressurized. The sheet on which the toner image has been fixed is conveyed to the image reader 340.

In addition, the image former 330 includes a printing sheet ejection device that ejects (purges) a sheet (waste sheet) having an inspection image that has been detected as abnormal by the image inspector 350 separately from a sheet on which a normal inspection image has been formed.

### <Configuration of Image Reader 340>

The image reader 340 includes the scanner 341 and a scanner controller 342. The scanner 341 reads a sheet (printed product) conveyed through the conveyance path with, for example, a charge coupled device (CCD) image sensor. The scanner controller 342 controls the scanner so that the scanner reads an inspection image formed on the sheet conveyed from the image former 330 according to a reading instruction from the controller 310. The scanner controller 342 outputs, to the controller 310, a read image obtained by reading the inspection image formed on the sheet.

### <Configuration of Image Inspector 350>

The image inspector 350 performs image inspection based on a reference image. More specifically, the image inspector 350 acquires the reference image and the read image, and compares the reference image with the read image page by page to inspect the inspection image formed on the sheet.

The image inspector 350 includes an image inspection controller 351. The image inspection controller 351 includes the image control CPU 311 or a CUP, a RAM, a ROM, and an auxiliary storage device (not illustrated). The function of inspecting an inspection image is implemented by the CPU executing an image inspection program. For example, the image inspection controller 351 calculates a difference (error) in pixel value between the reference image and the read image for each page, and determines the quality of the inspection image according to the magnitude of the difference. The difference can be calculated for each page, each object, or each region. For example, in a case where the difference is calculated for each page, an inspection result indicating "non-defective" is output when the total value of differences between pixels in one page is less than a specified value, and an inspection result indicating "defective" is output when the total value of the differences between the pixels in one page is equal to or more than the specified value. In addition, when the difference is calculated for each object or for each region, an inspection result indicating "non-defective" or "defective" is output according to the total value of differences between pixel values in the selected object or region.

When the result of inspecting the inspection image indicates "non-defective", the controller 310 determines that the printed product is a non-defective product. When the result of inspecting the inspection image indicates "defective", the controller 310 determines that the printed product is a defective product.

Furthermore, as described above, the reference image determiner can be configured to determine, as a condition for starting inspection of the inspection image, whether or not X% or more of the entire reference image is completed. In this case, the image inspector 350 starts inspection of the inspection image at the time point at which X% of the reference image has been generated. The reference image generator 380 generates a part (second half) of the reference image that has not yet been generated while the inspection of the inspection image corresponding to a part (first half) of the reference image that has been generated by the image inspector 350 is executed. After completing the inspection of the inspection image corresponding to the first half of the reference image, the image inspector 350 inspects the inspection image corresponding to the second half of the reference image.

### <Configuration of Operation Display 360>

The operation display 360 includes a touch screen display 361, an operation controller 362, a numeric keypad as hardware keys, a start button, a stop button, and the like. The touch screen display includes, for example, a touch sensor and a liquid crystal display (LCD) disposed behind the touch sensor. The operation controller 362 receives input from the touch sensor and the hardware keys and transmits input data to the controller 310. Furthermore, the operation controller 362 receives output data from the controller 310 and displays the output data on the LCD. The operation display 360 is used for input of various settings (e.g., on/off of inspection setting) and instructions (e.g., instruction to start printing) by the user. The operation display 360 is also used to output (display) the state of the image forming system 300, a result (non-defective product or defective product) of inspecting a printed product, an image of a defective printed product, and the like.

### <Configuration of Sheet Feeder 370>

The sheet feeder 370 includes at least one large-capacity sheet tray, and supplies sheets one by one to the image former 330.

### <Configuration of Reference Image Generator 380>

The reference image generator 380 generates a reference image based on a document image acquired by the document image acquirer and outputs the reference image to the controller 310. The information regarding the progress of the generation of the reference image is transmitted from the reference image generator 380 to the controller 310 periodically or in response to a request from the controller 310.

The reference image generator 380 can be implemented by a CPU (not illustrated) executing the image inspection program. The CPU that executes the image inspection program is different from the image control CPU 311. Thus, the generation of the reference image and the formation and inspection of the inspection image are performed in parallel. Alternatively, in a case where the image control CPU 311 is a multi-core CPU, the reference image generator 380 may be assigned to a core different from a core for the processing of forming and inspecting the inspection image, and the generation of the reference image and the formation and inspection of the inspection image may be performed in parallel by the different cores.

Note that conventionally, the same CPU has been configured to perform the generation of a reference image and the formation and inspection of an inspection image. Therefore, the CPU performs the formation and inspection of the inspection image after completing the generation of the reference image for each page, so that the generation of the reference image and the formation and inspection of the inspection image cannot be performed in parallel. The present embodiment is configured such that the generation of the reference image and the formation and inspection of the inspection image are performed by the different CPUs, whereby the generation of the reference image and the formation and inspection of the inspection image can be performed in parallel.

In addition, in a case where the document image is complex, a calculation load for generating the reference image may significantly increase. The CPU different from the image control CPU 311 generates the reference image, whereby the calculation load on the image control CPU 311 can be reduced.

### <Configuration of Storage Device 390>

The storage device 390 stores the reference image generated by the reference image generator 380. The storage device 390 may be, for example, a storage means such as a RAM, a solid state drive (SSD), or a hard disk drive (HDD). When the document image is reprinted, the controller 310 uses the reference image stored in the storage device 390. This eliminates the need to generate the reference image again. Therefore, the time required for generating the reference image can be saved.

### <Outline of Control Operation of Controller 310 and Print Controller 320>

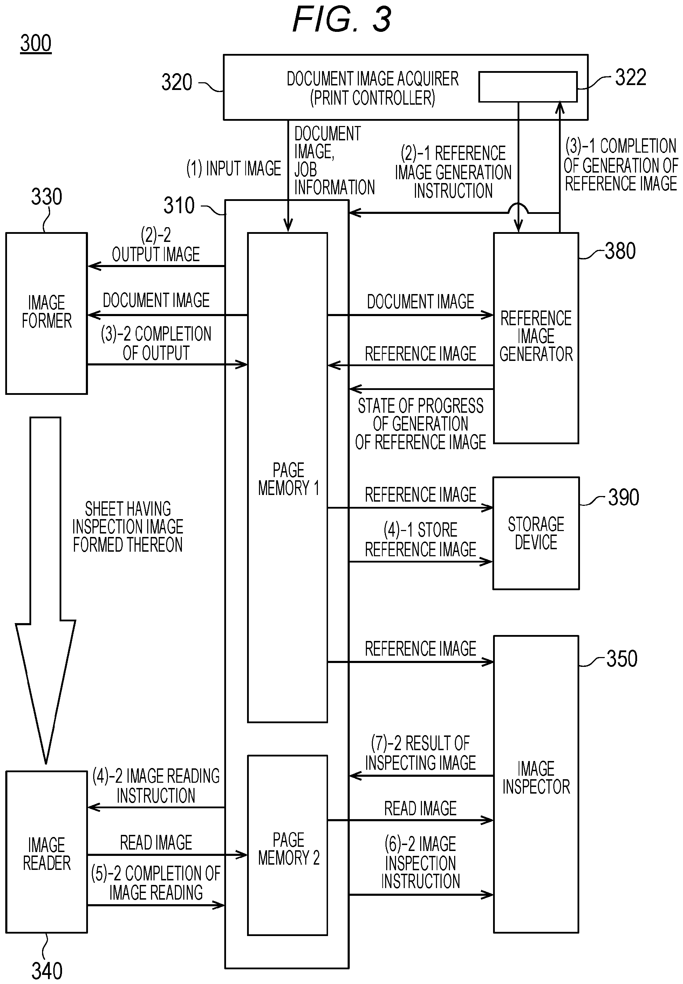

Fig. 3 is a block diagram for describing the outline of a control operation of the controller 310 and the print controller 320 illustrated in Fig. 2.

First, the controller 310 receives a document image and job information from the document image acquirer (print controller 320) ((1) input image). The document image is a RIP image obtained by rasterizing print data.

Upon receiving a reference image generation instruction from the reference image generation controller 322 ((2)-1 reference image generation instruction), the reference image generator 380 generates a reference image based on the document image acquired by the document image acquirer and outputs the reference image to the controller 310. The controller 310 stores the reference image in page memory 1.

As described above, the reference image generator 380 generates the reference image by performing various kinds of processing on the document image in terms of position, resolution, color, and the like. For example, in order that content portions (contents) of the reference image and the read image can be compared with each other, the reference image generator 380 can extract the position information of the content portion from the document image and add or embed the position information to or in the reference image. That is, the reference image generated by the reference image generator 380 includes alignment information for aligning the reference image and the read image when the image inspection is performed based on the reference image. Note that the alignment information includes outline information and edge information of the image. In addition, the reference image generated by the reference image generator 380 has region information regarding an inspection region and an inspection exclusion region used for the image inspection performed based on the reference image. Furthermore, the reference image generator 380 can generate a reference image by adjusting the resolution of the document image so as to match the resolution of the scanner of the image reader 340. Furthermore, the reference image generator 380 can generate a reference image by converting the color space of the document image so as to match the color space (e.g., RGB) adopted by the scanner of the image reader 340.

In addition, upon receiving the document image from the document image acquirer, the controller 310 instructs the image former 330 to form an image and outputs the document image stored in page memory 1 to the image former 330 ((2)-2 output image). In the present embodiment, the image former 330 forms an inspection image on a sheet based on the document image. The generation of the reference image by the reference image generator 380 and the formation of the inspection image by the image former 330 are executed in parallel.

After completing the generation of the reference image, the reference image generator 380 gives a notification indicating that the generation of the reference image has been completed to the controller 310 and the reference image generation controller 322 ((3)-1 completion of generation of reference image). In addition, when the generation of the reference image is not completed, the reference image generator 380 notifies the controller 310 of the progress of the generation of the reference image. Furthermore, when completing the image formation on the sheet, the image former 330 gives a notification indicating the completion of output to the controller 310 ((3)-2 completion of output). The storage device 390 stores the generated reference image ((4)-1 store reference image).

Further, the controller 310 outputs an image reading instruction to the image reader 340 immediately after receiving the notification indicating the completion of the output ((4)-2 image reading instruction). The image reader 340 reads the sheet on which the inspection image is formed, and outputs the read image of the sheet to the controller 310. The controller 310 stores the read image in page memory 2. When completing reading the sheet, the image reader 340 gives a notification indicating that the image reading has been completed ((5)-2 completion of image reading).

The controller 310 receives the notification indicating the completion of the image reading and outputs an image inspection instruction to the image inspector 350 ((6)-2 image inspection instruction). The image inspector 350 acquires the reference image and the read image from page memory 1 and page memory 2, respectively, and inspects the inspection image by comparing the reference image with the read image. Then, the image inspector 350 outputs the result of inspecting the inspection image to the controller 310 ((7)-2 result of inspecting image).

In response to an instruction from the user, the controller 310 performs control such that the result (indicating a non-defective product or a defective product) of inspecting the printed product is displayed on the operation display 360 or the display of the client terminal 200, on the basis of the result of inspecting the inspection image.

### <Image Inspection Method by Image Forming System 300>

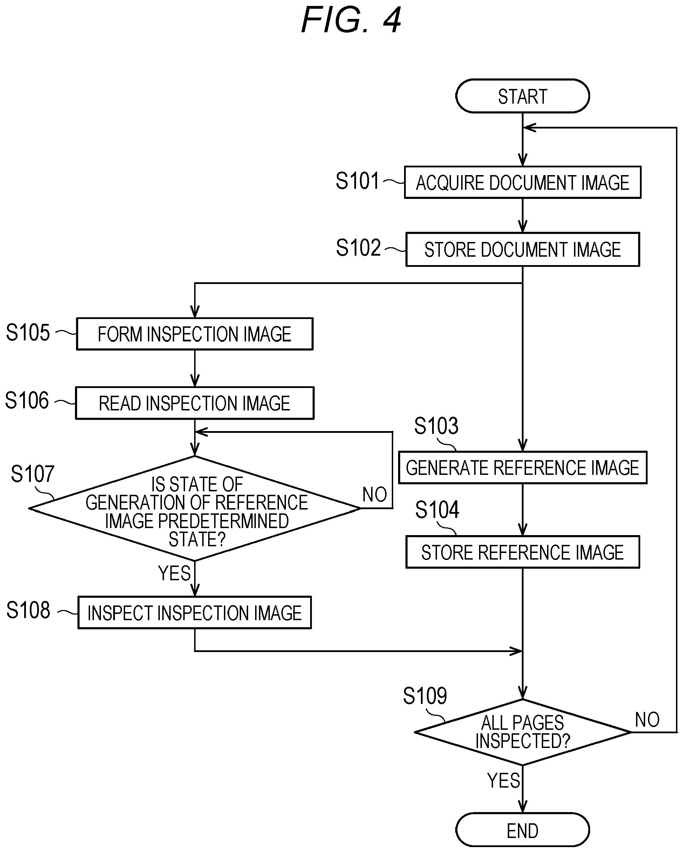

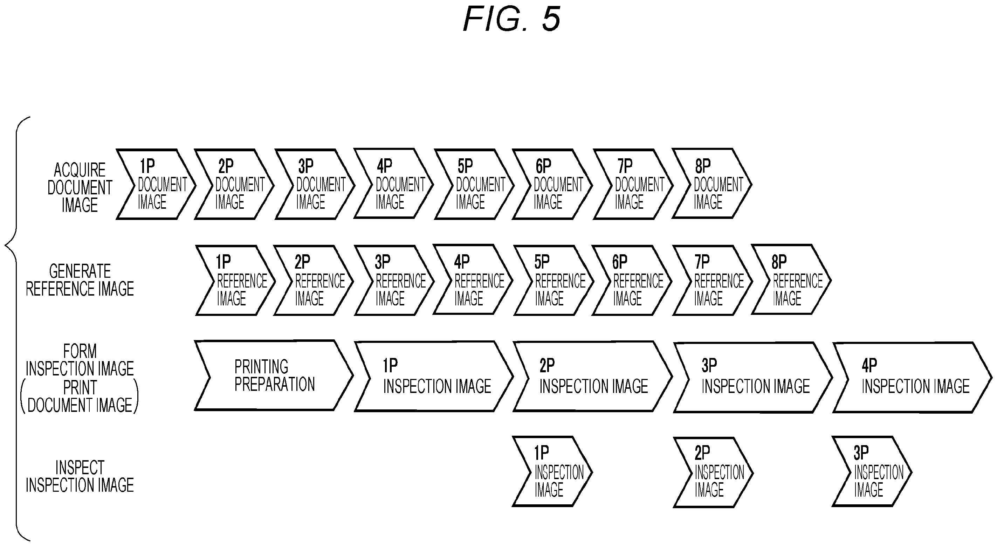

Fig. 4 is a flowchart illustrating a processing procedure of an image inspection method performed by the image forming system illustrated in Fig. 1. Each process illustrated in Fig. 4 is implemented by the image control CPU 311 executing an image inspection program. Fig. 5 is a schematic diagram illustrating, in a time-series manner, processing of acquiring a document image, processing of generating a reference image, processing of forming an inspection image, and processing of inspecting the inspection image.

As illustrated in Fig. 4, first, the controller 310 acquires a document image (step S101). The controller 310 sequentially receives, from the document image acquirer, the first page to the last n-th page of the document image (RIP image) page by page in order from the first page to the last n-th page. For example, Fig. 5 illustrates a case where the first to eighth pages of the document image are sequentially received.

Next, the controller 310 stores the document image (step S102). When the print job is started, the controller 310 stores the document image acquired from the document image acquirer page by page in page memory 1.

Next, the controller 310 controls generation of a reference image to be used for inspection of the inspection image. The reference image generator 380 generates a reference image in accordance with an instruction from the controller 310 (step S103). For example, when the first page of the document image is acquired and stored in page memory 1, the controller 310 controls the reference image generator 380 so that the reference image generator 380 generates the reference image based on the first page of the document image. The reference image generator 380 generates a reference image based on the first page of the document image. A reference image is similarly generated for the second page of the document image.

Next, the storage device 390 stores the reference image generated by the reference image generator 380 (step S104). For example, the storage device 390 stores the first page and the second page of the document image. In addition, in the present embodiment, the controller 310 controls the image former 330 so that the image former 330 forms an inspection image on a sheet based on the document image and the job information received from the document image acquirer, in parallel with the processes of steps S103 and S104, as illustrated in Fig. 4. For example, the controller 310 performs printing preparation and controls the image former 330 so that the image former 330 forms an inspection image on a sheet based on the first page of the document image. The image former 330 forms an inspection image based on the first page of the document image on a sheet in accordance with an instruction from the controller 310 (step S105). After the inspection image based on the first page of the document image is formed, an inspection image based on the second page of the document image is similarly formed on the sheet.

Next, the image reader 340 reads the inspection image formed on the sheet (step S106).

Next, the reference image determiner determines whether or not the state of generation of the reference image satisfies a predetermined state for each page of the acquired document image (step S107). That is, the reference image determiner determines the state of generation of the reference image corresponding to the inspection image after the image formed on the sheet based on the inspection image is read. For example, when the reference image has already been generated as the state of generation of the reference image (YES in step S107), the image inspector 350 compares the reference image with the read image to inspect the inspection image (step S108).

Then, the controller 310 repeats the processes of steps S101 to S108 until the inspection of the inspection images is completed for all the pages (from the first page to the last n-th page) (step S109).

On the other hand, when a reference image has not been generated (NO in step S107), the image inspector 350 waits until a reference image is generated. For example, when the reference image based on the same document image (first page) as the document image (first page) serving as the source of the inspection image to be inspected in step S108 has not been generated, the image inspector 350 waits until the reference image based on the document image (first page) is generated.

As illustrated in Fig. 5, the generation of the reference image by the reference image generator 380 and the formation and inspection of the inspection image by the image former 330 are performed in parallel. Thus, the image forming system 300 can further shorten the time required for the processing from the generation of the reference image to the image inspection as compared with the conventional technology.

### [Generation of Reference Image and Formation of Inspection Image on Sheet to be Performed in Parallel]

For example, in the example illustrated in Fig. 5, the generation of the reference images based on the first page (1P) and the second page (2P) and the printing preparation are executed in parallel, and the generation of the reference image based on the third page (3P) and the formation of the inspection image based on the first page (1P) are executed in parallel. After that, the generation of the reference image based on the fourth page (4P) and the formation of the inspection image based on the first page (1P) are executed in parallel. Note that, although the generation of the reference image based on the third page (3P) and the formation of the inspection image based on the first page (1P) are illustrated as being started at the same time in Fig. 5, it is not limited thereto. The formation of the inspection image based on the first page (1P) can be started at an appropriate timing after the completion of the printing preparation, and the generation of the reference image based on the third page (3P) can be started at an appropriate timing after the generation of the reference image based on the second page (2P). The timing of starting the generation of the reference image and the timing of starting the generation of the inspection image are similar for the subsequent pages.

### [Generation of Reference Image, Formation of Inspection Image on Sheet, and Inspection of Inspection Image to be Performed in Parallel]

Thereafter, the generation of the reference image based on the fifth page (5P), the formation of the inspection image based on the second page (2P), and the inspection of the inspection image based on the first page are executed in parallel.

As described above, in the present embodiment, while the reference image is generated upon receipt of the document image (the generation of the reference image is triggered by the reception of the document image), the inspection image is formed on the sheet and is inspected when the printing preparation is completed. In the present embodiment, the generation of the reference image and the formation and inspection of the inspection image are performed in parallel, whereby it is possible to shorten the time required for the processing from the generation of the reference image to the image inspection. As a result, the productivity of a printed product is improved.

### <Print Job>

As described above, the image forming system 300 receives a print job, and generates a reference image and forms an inspection image in parallel in a case where the inspection setting of job information is on. The controller 310 and the print controller 320 perform control such that the generation of the reference image by the reference image generator 380 and the formation of the inspection image by the image former 330 are performed in parallel in one (same) print job.

On the other hand, the image forming system 300 may perform the generation of the reference image and the formation and inspection of the inspection image according to separate print jobs. The controller 310 and the print controller 320 perform control so as to perform the reference image generation process (reference image generation job) and the inspection process (inspection job) in parallel. Here, the reference image generation process includes generating a reference image by the reference image generator 380. The inspection process includes forming an inspection image on a sheet by the image former 330 and inspecting, by the image inspector 350, a read image generated by reading the sheet on which the inspection image has been formed. For example, the reference image generation process can be performed by a CPU different from the image control CPU 311, and the inspection process can be performed by the image control CPU 311. Alternatively, when the controller 310 includes a multi-core CPU, the reference image generation process and the inspection process may be assigned to different cores, and may be performed in parallel by these cores.

### <Determination Timing of Determining State of Generation of Reference Image>

The above-mentioned example has described an example in which the reference image determiner determines the state of generation of the reference image corresponding to the inspection image after the image formed on the sheet based on the inspection image is read. In the following, a case where the state of generation of the reference image corresponding to the inspection image is determined at another determination timing before the inspection of the inspection image will be described.

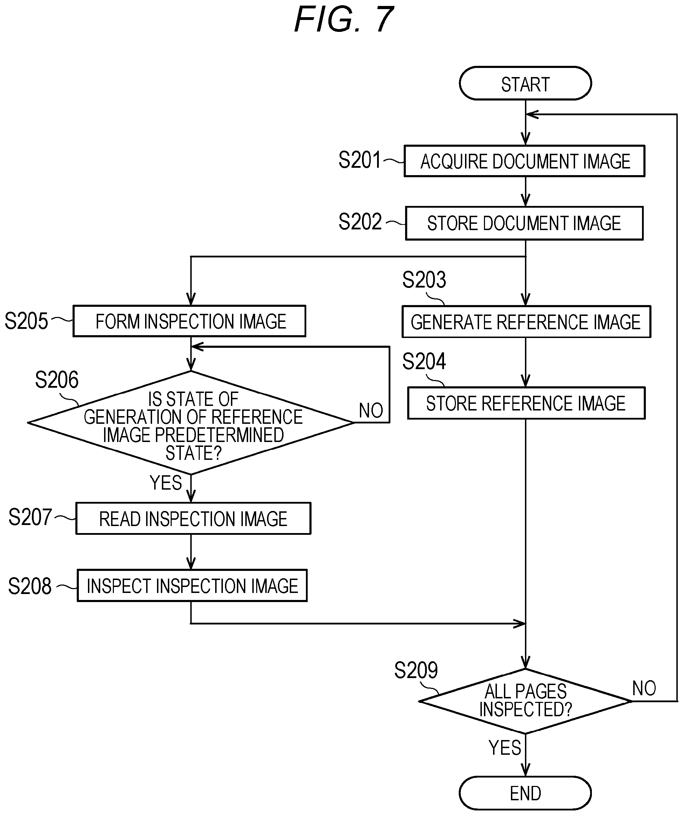

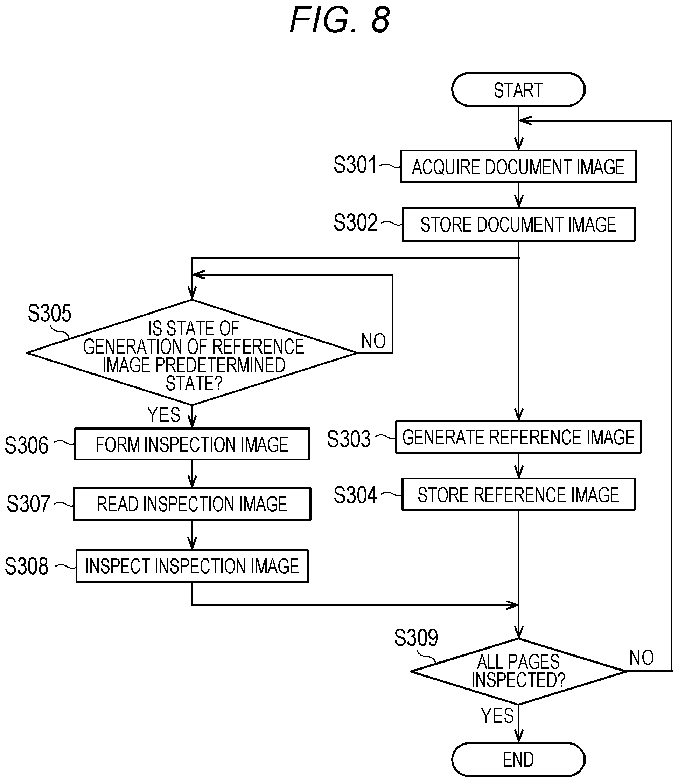

Fig. 6 is a diagram for describing a modification example of the determination timing of determining the state of generation of the reference image. Fig. 7 is a flowchart illustrating a processing procedure of an image inspection method in a case where the state of generation of a reference image corresponding to an inspection image is determined after the formation of the inspection image and before reading of the inspection image. Fig. 8 is a flowchart illustrating a processing procedure of the image inspection method in a case where the state of generation of the reference image corresponding to the inspection image is determined before the formation of the inspection image. The processing illustrated in Figs. 7 and 8 is implemented by the image control CPU 311 executing the image inspection program.

As illustrated in Fig. 6, the reference image determiner can be configured to determine the state of generation of the reference image corresponding to the inspection image at any determination timing in the reading process from the start of the reading of the inspection image to the completion of the reading as another determination timing before the inspection of the inspection image. More specifically, the reference image determiner can be configured to determine the state of generation of the reference image corresponding to the inspection image at a timing at which the reading of the inspection image formed on a sheet is started, a timing during reading, or a timing at which the reading is completed. For example, the reference image determiner can determine the state of generation of reference image 1 corresponding to inspection image 1 at a timing at which the reading of inspection image 1 is started, a timing during the reading, or a timing at which the reading is completed.

A case where the state of generation of the reference image is determined at, for example, a timing at which the reading is started will be described with reference to Fig. 7. The processes of steps S201 to S204, S208, and S209 in Fig. 7 are the same as the processes of steps S101 to S104, S108, and S109 in Fig. 4 described above, and thus, will not be described in detail.

After the inspection image is formed in step S205, the reference image determiner determines whether or not the state of generation of a reference image satisfies a predetermined state (step S206). When the state of generation of the reference image satisfies the predetermined state (YES in step S206), the controller 310 causes the image reader 340 to read the inspection image formed on the sheet by controlling the image reader 340 (step S207). On the other hand, when the state of generation of the reference image does not satisfy the predetermined state (NO in step S206), the controller 310 waits until the state of generation of the reference image satisfies the predetermined state.

The reference image determiner can be configured to determine the state of generation of the reference image at any determination timing in the image forming process from the start of image formation to the completion of image formation as another determination timing before the inspection of the inspection image. More specifically, the reference image determiner can be configured to determine the state of generation of the reference image at a timing at which the image formation is started, a timing during the image formation, or a timing at which the image formation is completed.

A case where the state of generation of the reference image is determined at, for example, a timing at which the image formation is started will be described with reference to Fig. 8. The processes of steps S301 to S304, S308, and S309 in Fig. 8 are the same as the processes of steps S101 to S104, S108, and S109 in Fig. 4 described above, and thus, will not be described in detail.

After the document image is stored in step S302, the reference image determiner determines whether or not the state of generation of a reference image satisfies a predetermined state (step S305). When the state of generation of the reference image satisfies the predetermined state (YES in step S305), the controller 310 causes the image former 330 to form an inspection image on a sheet by controlling the image former 330 (step S306) and causes the image reader 340 to read the inspection image formed on the sheet by controlling the image reader 340 (step S307). Next, the controller 310 causes the image inspector 350 to inspect the inspection image by controlling the image inspector 350 (step S308). On the other hand, when the state of generation of the reference image does not satisfy the predetermined state (NO in step S305), the controller 310 waits until the state of generation of the reference image satisfies the predetermined state.

Note that a plurality of the above-described determination timings may be combined. By combining a plurality of determination timings, image formation or image inspection can be stopped until the reference image is generated so as to prevent an occurrence of a situation in which the reference image is not formed at the time of inspection of the inspection image.

The image inspection apparatus, the image inspection method, and the image inspection program according to the first embodiment described above can provide the following effects.

It is determined whether or not the state of generation of a reference image satisfies a predetermined state before the inspection of the inspection image is performed, whereby it is possible to recognize the state of generation of the reference image before the image inspection while shortening the time required for the processing from the generation of the reference image to the image inspection. In addition, it is possible to perform control according to the state of generation of the reference image, whereby a decrease in productivity can be prevented or suppressed.

### (Second Embodiment)

The second embodiment will describe a case where the execution of an inspection

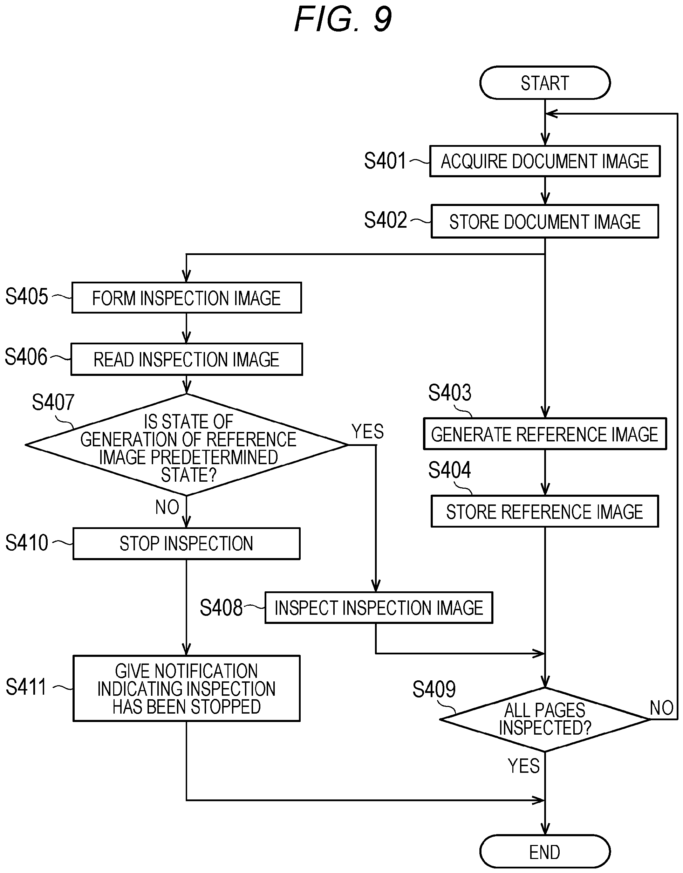

process is controlled on the basis of a determination result of whether or not a state of generation of a reference image corresponding to an inspection image satisfies a predetermined state. Fig. 9 is a flowchart illustrating a processing procedure of an image inspection method performed by an image forming system according to the second embodiment. The processing illustrated in Fig. 9 is implemented by an image control CPU 311 executing an image inspection program. In order to avoid repetition in description, the same configurations as those of the first embodiment will not be described.

The processes of steps S401 to S406 in Fig. 9 are the same as the processes of steps S101 to S106 in Fig. 4 in the first embodiment, and thus, will not be described in detail.

In step S407, the reference image determiner determines whether or not the state of generation of a reference image satisfies a predetermined state. The predetermined state can be, for example, a state in which the reference image has been generated or a state in which X% of the entire reference image has been completed. When the state of generation of the reference image satisfies the predetermined state (YES in step S407), the image inspector 350 inspects the inspection image (step S408).

The controller 310 repeats the processes of steps S401 to S408 until the inspection of the inspection images is completed for all the pages (from the first page to the last n-th page) (step S409).

On the other hand, when the state of generation of the reference image does not satisfy the predetermined state (NO in step S407), the controller 310 skips inspection of the inspection image, and stops the inspection (step S410). Specifically, the controller 310 stops the print job (inspection job). As a result, the formation of the inspection images based on the next and subsequent pages on the sheet and the inspection of the inspection images are stopped.

Next, the controller 310 gives a notification indicating that the inspection has been stopped (step S411), and then, ends the processing (END). For example, the controller 310 gives a notification indicating that the inspection has been stopped by, for example, displaying a warning on a display of an operation display 360, blinking or lighting a rotary beacon light, or sending an e-mail.

As described above, the controller 310 controls the execution of an inspection process on the basis of a determination result of whether or not a state of generation of a reference image corresponding to an inspection image satisfies a predetermined state.

The image inspection apparatus, the image inspection method, and the image inspection program according to the second embodiment described above provide the following effects in addition to the effects of the first embodiment.

The execution of the inspection process is controlled on the basis of a determination result of whether or not the state of generation of the reference image satisfies a predetermined state. Therefore, it is possible to suppress an increase in the standby time of the inspection process in a case where it takes more time to generate the reference image than expected by the user.

### (Third Embodiment)

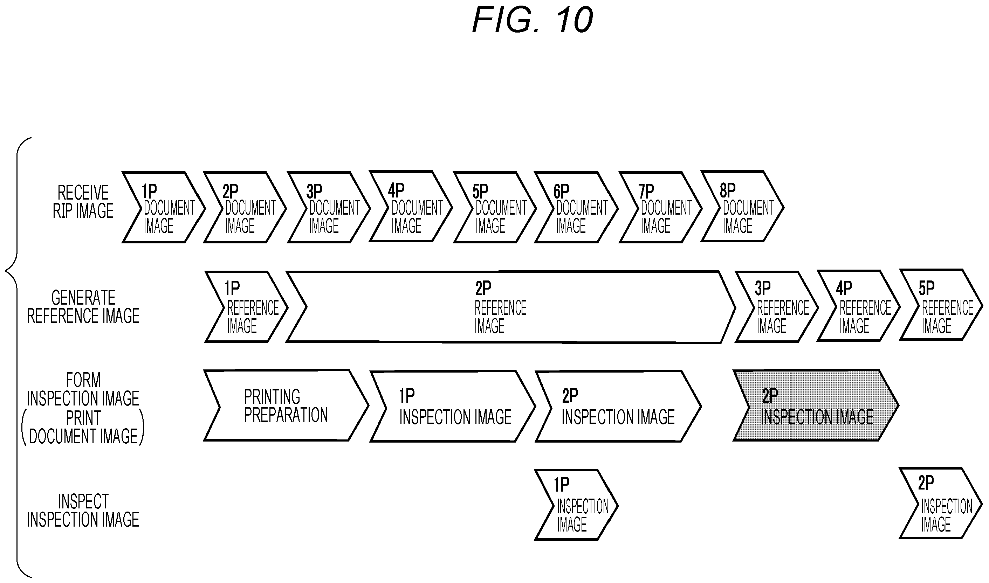

The third embodiment will describe a case where an inspection image is formed again (recovery printing) when a reference image has not been generated. Fig. 10 is a schematic diagram illustrating, in a time-series manner, processing of acquiring a document image, processing of generating a reference image, processing of forming an inspection image, and processing of inspecting the inspection image in a case where recovery printing is performed. In order to avoid repetition in description, the same configurations as those of the first embodiment will not be described.

The controller 310 and the image former 330 function as a recovery printing section. For example, in general, the more complicated a document image is, the more time is required for the reference image generator 380 to generate a reference image. For example, Fig. 10 illustrates an example in which the second page of the document image is complicated, and thus it takes time to generate the reference image based on the second page. The recovery printing section performs recovery printing when the generation of the reference image is not completed by the time of the inspection of the corresponding inspection image. For example, in the example illustrated in Fig. 10, the generation of the reference image based on the second page is not completed even after the formation of the inspection image based on the second page, and thus, the recovery printing section waits for the completion of the generation of the reference image and then performs the recovery printing of the second page of the document image (formation of the inspection image based on the second page). The controller 310 purges the sheet on which the inspection image based on the second page has already been printed. Thus, a sheet on which an uninspected inspection image has been formed is prevented from being mixed with a sheet on which a normal inspection image has been formed.

Furthermore, the image inspector 350 can perform image inspection using the reference image stored in the storage device 390 during recovery printing. Thus, it is not necessary to generate the reference image again by the reference image generator 380, whereby the time required for generating the reference image can be saved.

### <Image Inspection Method by Image Forming System according to Third Embodiment>

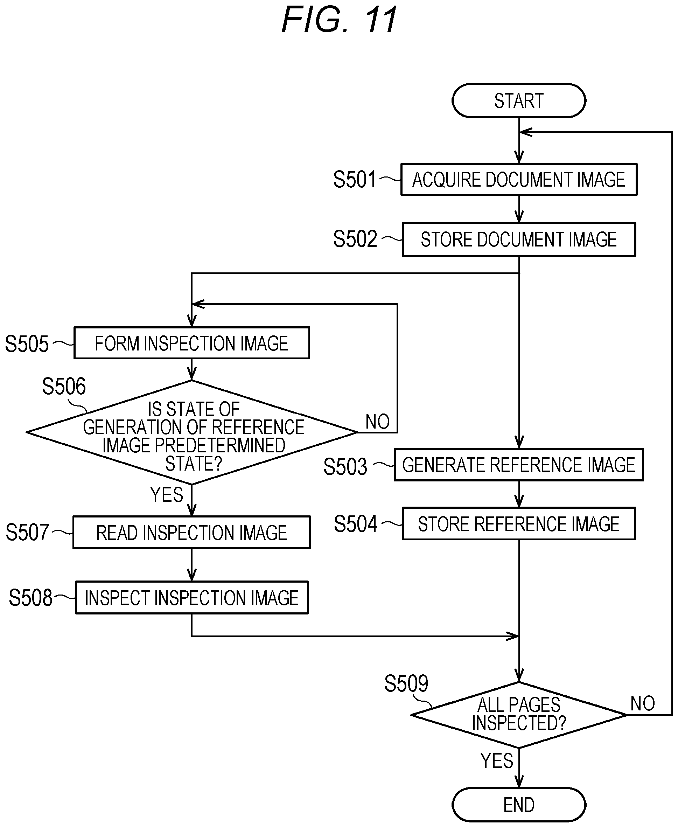

Fig. 11 is a flowchart illustrating a processing procedure of an image inspection method performed by an image forming system according to the third embodiment. The processing illustrated in Fig. 11 is implemented by an image control CPU 311 executing an image inspection program. Note that the processes of steps S501 to S505 are the same as the processes of steps S101 to S105 in Fig. 4 in the first embodiment, and thus will not be described in detail.

In step S506, the reference image determiner determines whether or not the state of generation of a reference image satisfies a predetermined state. The predetermined state can be, for example, a state in which the reference image has been generated or a state in which X% of the entire reference image has been completed. When the state of generation of the reference image satisfies the predetermined state (YES in step S506), the image inspector 350 reads the inspection image (step S507) and inspects the inspection image (step S508).

The controller 310 repeats the processes of steps S501 to S508 until the inspection of the inspection images is completed for all the pages (from the first page to the last n-th page) (step S509).

On the other hand, when the state of generation of the reference image does not satisfy the predetermined state (NO in step S506), the image former 330 executes step S505 to print an inspection image again.

Note that the image forming system 300 can be configured to store the document image stored in page memory 1 in step S502 illustrated in Fig. 11 in the storage device 390 when performing the recovery printing. Using the document image stored in the storage device 390 eliminates the need for the processes of steps S501 and S502 in addition to the processes of generating and storing the reference image (steps S503 and S504). Therefore, the controller 310 and the print controller 320 perform control to execute only the process of forming an inspection image and the process of inspecting the inspection image in the print job. Thus, the time required from the start of the print job to the completion of the inspection of the printed product can be shortened. As a result, the productivity of a printed product is improved.

### (Fourth Embodiment)

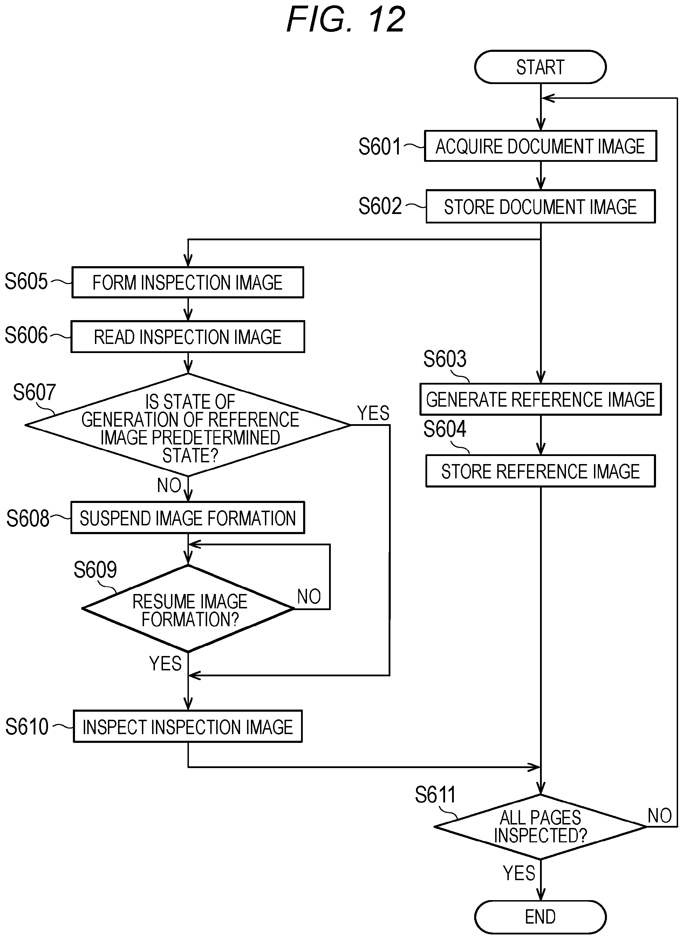

The fourth embodiment will describe a case where suspension and restart of an inspection process are controlled on the basis of a determination result of whether or not a reference image corresponding to an inspection image has been already generated. Fig. 12 is a flowchart illustrating a processing procedure of an image inspection method performed by an image forming system according to the fourth embodiment. The processing illustrated in Fig. 12 is implemented by an image control CPU 311 executing an image inspection program. In order to avoid repetition in description, the same configurations as those of the first embodiment will not be described.

The processes of steps S601 to S606 in Fig. 12 are the same as the processes of steps S101 to S106 in Fig. 4 in the first embodiment, and thus, will not be described in detail.

In step S607, the reference image determiner determines whether or not the state of generation of a reference image satisfies a predetermined state. The predetermined state can be, for example, a state in which the reference image has been generated or a state in which X% of the entire reference image has been completed. When the state of generation of the reference image satisfies the predetermined state (YES in step S607), the image inspector 350 inspects the inspection image (step S610).

On the other hand, when the state of generation of the reference image does not satisfy the predetermined state (NO in step S607), the image former 330 suspends the formation of the inspection image (step S608).

Next, the controller 310 determines whether to resume the image formation (step S609). For example, the controller 310 waits until receiving an instruction regarding resuming the image formation from the user, and resumes the image formation of the inspection image when receiving the instruction regarding resuming the image formation.

Next, the image inspector 350 performs the process of inspecting the inspection image (step S610). Then, the controller 310 repeats the processes of steps S601 to S610 until the inspection of the inspection images is completed for all the pages (from the first page to the last n-th page) (step S611).

Note that the controller 310 may be configured to, after the image formation by the image former 330, stop the system immediately before the image reader 340 reads the image formed on the sheet, wait until the reference image is generated, and then perform the inspection.

The image inspection apparatus, the image inspection method, and the image inspection program according to the fourth embodiment described above provide the following effects in addition to the effects of the first embodiment.

The suspension and restart of the formation of the inspection image are controlled on the basis of a determination result of whether or not the state of generation of the reference image satisfies a predetermined state. Therefore, it is possible to prevent the formation of the inspection image from progressing too far in a case where it takes more time to generate the reference image than expected by the user.

As described above, the image inspection apparatus, the image inspection method, and the image inspection program have been described in the embodiment. However, it is obvious that those skilled in the art can appropriately make addition, modifications, and omissions with respect to the present invention within the scope of the technical idea thereof.

For example, although the above embodiment has described the case of generating a document image based on a print job, the present invention is not limited to such a case. The image former 330 may include an image reading device 333 (see Fig. 1) that reads a document prepared by a user, and may be configured to generate a document image based on an image generated by reading the document by the image reading device 333. The image reading device 333 reads, for example, a document conveyed to a predetermined reading position by an automatic document feeder using a scanner, and generates image data.

Furthermore, the image inspection program may be provided by a computer-readable recording medium, such as a USB memory, a flexible disk, or a CD-ROM, or may be provided online via a network, such as the Internet. In this case, the image inspection program recorded on the computer-readable recording medium is usually transferred to and stored in a memory, a storage, or the like. Alternatively, the image inspection program may be provided, for example, as independent application software, or may be incorporated into software of each device as a function of a server.

Furthermore, a part or a whole of the processing performed by the image inspection program in the embodiment can be performed in the form of hardware such as circuits.

Although embodiments of the present invention have been described and illustrated in detail, the disclosed embodiments are made for purposes of illustration and example only and not limitation. The scope of the present invention should be interpreted by terms of the appended claims.

### Reference Signs List

100 Printing system
200 Client terminal
300 Image forming system
310 Controller
311 Image control CPU
312 DRAM control IC
313 Memory
314 Image memory (DRAM)
315 Compression/decompression IC
316 Reading processor
317 Writing processor
318 Storage
320 Print controller
321 Controller control section
322 Reference image generation controller
323 DRAM control IC
324 Image memory (DRAM)
325 Communication controller
326 Communication I/F
330 Image former
331 Printer controller
332 Exposure section
333 Image reading device
340 Image reader
341 Scanner
342 Scanner controller
350 Image inspector
351 Image inspection controller
360 Operation display
361 LCD/touch sensor
362 Operation controller
370 Sheet feeder
380 Reference image generator
390 Storage device
400 Communication line

## Claims

1. An image inspection apparatus comprising:
an image former (330) that forms an image on a recording medium based on image data;
a reference image generator (380) that generates, based on the image data, a reference image to be used for inspection of the image formed on the recording medium;
an image inspector (350) that performs inspection of the image formed on the recording medium based on the reference image; and
a determiner (310) that performs determination of whether or not a state of generation of the reference image by the reference image generator (380) satisfies a predetermined state before the image inspector (350) inspects the image.

2. The image inspection apparatus according to claim 1, wherein the determiner (310) determines, before the image inspector (350) inspects the image, whether or not the reference image generator (380) has completed the generation of the reference image.

3. The image inspection apparatus according to claim 1, wherein the determiner (310) determines, before the image inspector (350) inspects the image, whether or not the reference image generator (380) has generated the reference image up to a predetermined stage.

4. The image inspection apparatus according to claim 1, wherein the image inspector (350) performs the inspection for each of pages of the recording medium on which the image is formed by the image former (330), and
the determiner (310) performs the determination for each of the pages.

5. The image inspection apparatus according to claim 1 or 4, wherein the determiner (310) performs the determination at a predetermined timing before the inspection of the image is performed by the image inspector (350) and after an image forming process by the image former (330) is started.

6. The image inspection apparatus according to claim 5, wherein the predetermined timing is a timing of starting formation of the image on the recording medium by the image former (330).

7. The image inspection apparatus according to claim 5, wherein the predetermined timing is a timing during formation of the image on the recording medium by the image former (330).

8. The image inspection apparatus according to claim 5, wherein the predetermined timing is a timing at which formation of the image on the recording medium by the image former (330) is completed.

9. The image inspection apparatus according to claim 1 or 4, wherein the determiner performs the determination at a timing at which the inspection of the image by the image inspector (350) is started.

10. The image inspection apparatus according to claim 1 or 4, further comprising a reader (340) that reads the image formed on the recording medium, wherein
the determiner (310) performs the determination at a predetermined timing during a reading process by the reader (340).

11. The image inspection apparatus according to claim 10, wherein the predetermined timing is any one of a timing at which reading of the recording medium on which the image is formed by the reader (340) is started, a timing during the reading, and a timing at which the reading is completed.

12. The image inspection apparatus according to claim 1 or 4, further comprising a controller that controls the image inspector when the determiner determines that a state of generation of the reference image by the reference image generator does not satisfy the predetermined state, wherein
the controller suspends the inspection by the image inspector.

13. The image inspection apparatus according to claim 1 or 4, further comprising a controller that performs, in parallel, a reference image generation process including generating the reference image by the reference image generator, and an inspection process including forming the image on the recording medium by the image former and inspecting, by the image inspector, a read image generated by reading the recording medium on which the image has been formed.

14. An image inspection method comprising:
a step (a) of forming an image on a recording medium based on image data;
a step (b) of generating, based on the image data, a reference image to be used for inspection of the image formed on the recording medium;
a step (c) of inspecting the image formed on the recording medium based on the reference image; and
a step (d) of determining whether or not a state of generation of the reference image in the step (b) satisfies a predetermined state before the image is inspected in the step (c).

15. An image inspection program for causing a computer to execute processing comprising:
a process (a) of forming an image on a recording medium based on image data;
a process (b) of generating, based on the image data, a reference image to be used for inspection of the image formed on the recording medium;
a process (c) of inspecting the image formed on the recording medium based on the reference image; and
a process (d) of determining whether or not a state of generation of the reference image in the process (b) satisfies a predetermined state before the image is inspected in the process (c).
